# EUROPÄISCHE PATENTSCHRIFT

(11) **EP 0 529 268 B1**
(45) Veröffentlichungstag und Bekanntmachung des Hinweises auf die Patenterteilung: **11.09.1996**
(21) Anmeldenummer: 92111855.0
(22) Anmeldetag: 11.07.1992
(51) Int. Cl.: G02B 1/10, C23C 14/08, C23C 14/54

(54) **Harte Entspiegelungsschicht für Kunststofflinsen**
Anti-reflex hard coating for plastic lenses
Couche dure antireflet pour lentille en plastique

(30) Priorität: 28.08.1991 DE 4128547
(43) Veröffentlichungstag der Anmeldung: 03.03.1993
(73) Patentinhaber: LEYBOLD AKTIENGESELLSCHAFT, D-63450 Hanau (DE)
(72) Erfinder: Zöller, Alfons, Dipl.-Ing. (FH), W-6483 Bad Soden-Salmünster (DE); Matl, Karl, Dr. rer. nat., W-8752 Kleinostheim (DE); Götzelmann, Rainer, Dipl.-Phys., W-6458 Rodenbach 1 (DE); Sauer, Günther, W-6457 Maintal 2 (DE)
(74) Vertreter: Schickedanz, Willi, Dipl.-Ing.

(56) Entgegenhaltungen:
- EP-A- 0 294 572
- DE-A- 2 240 488
- DE-A- 2 538 982
- JP-A-61 246 361
- US-A- 3 991 234
- US-A- 4 052 520
- PATENT ABSTRACTS OF JAPAN vol. 9, no. 292 (P-406)19. November 1985 & JP-A-60 130 704
- PATENT ABSTRACTS OF JAPAN vol. 12, no. 370 (P-767)5. Oktober 1988 & JP-A-63 121 801
- PATENT ABSTRACTS OF JAPAN vol. 15, no. 349 (P-1247)4. September 1991 & JP-A-31 32 601
- PATENT ABSTRACTS OF JAPAN vol. 10, no. 89 (P-444)8. April 1986 & JP-A-60 225 101
- PATENT ABSTRACTS OF JAPAN vol. 14, no. 402 (P-1099)30. August 1990 & JP-A-21 54 201

## Beschreibung

Die Erfindung betrifft ein Verfahren und eine Vorrichtung nach dem Oberbegriff der Patentansprüche 1, 11 und 20.

Bei Linsen besteht oft das Problem, eine Schutzschicht aufzubringen, die einerseits lichtdurchlässig ist und andererseits entspiegelt. Dies trifft sowohl für Kameralinsen als auch für Linsen von Brillengläsern zu. Beispielsweise können Brillengläser bei unsachgemäßer Behandlung extremen Belastungen ausgesetzt sein, die nicht nur bei Kunststoffgläsern, sondern auch bei Silikatgläsern Kratzer hervorrufen. Verantwortlich für eine Oberfächenverletzung ist in der Regel ein scharfkantiger Gegenstand, der mit Druck über die Oberfläche gezogen wird. Das kann z. B. Sand mit seinen scharfen Kanten sein, der sich im Putztuch oder Etui befindet, oder auch ein rauhes Gewebe.

Kunststoffgläser, die immer häufiger anstelle von Silikatgläsern eingesetzt werden, weil sie die Eigenschaften des geringeren Gewichts und der höheren Bruchfestigkeit mit der Möglichkeit der individuellen Einfärbung verbinden, haben jedoch den gravierenden Nachteil, daß ihre gegenüber Silikatgläsern erheblich weichere Oberfläche sehr anfällig gegen mechanische Verletzungen ist.

Weit verbreitet als Linsen-Kunststoffe sind die Duroplaste, die aus chemisch engmaschig untereinander gebundenen Makromolekülen bestehen. Bei Raumtemperaturen sind sie meist sehr spröde. Sie sind außerdem temperaturstandfest, nicht schweißbar, unlöslich und nur schwach quellbar. Ein in der Brillen-Optik bevorzugtes Duroplast ist CR 39, bei dem es sich um ein Diallyldiethylenglykolkarbonat handelt Erst in jüngster Zeit traten neben diesen in der Brillenoptik fast ausschließlich verwendeten Kunststoff auch noch andere Kunststoffe wie Polymethylmethacrylat (PMMA), Polystyrol (PS) und Polycarbonat (PC).

Soll z. B. ein CR 39-Kunststoff mit einer entsprechenden Schutzschicht versehen werden, so sind die Probleme des sich Ablösens der Schutzschicht vom Linsenkörper, die unterschiedliche Wärmeausdehnung von Schutzschicht und Linsenkörper sowie in vielen Fällen die niedrige Temperaturbeständigkeit der Schutzschicht zu lösen.

Bei Silikat-Beschichtungen wird das Substrat auf eine hohe Temperatur von ca. 300 °C erhitzt, wodurch für die in einem Aufdampfprozeß aufgebrachten Beschichtungsmoleküle genügend Energie zur Verfügung steht, um defektfreie dichte Schichten zu erzeugen. Bei der Herstellung einer Kunststoff-Beschichtung muß dagegen in der Regel kalt aufgedampft werden.

Um in diesem Fall die notwendige Energie bereitzustellen, werden die aufwachsenden Schichten mit Ionen eines inerten Gases bombardiert. Zusätzliche Ionisation der Dampfteilchen und des Reaktivgases verstärkt den Verdichtungsprozeß bei der Schichtkondensation.

Neben diesen sogenannten ionengestützten Aufdampfverfahren (IAD) ist auch noch die sogenannte Plasmapolymerisation bekannt, bei der während des Schichtaufbaus die Eigenschaften der Schicht kontinuierlich so verändert werden können, daß sie auf der einen Seite von der chemischen Struktur her der Kunststoffoberfläche angepaßt sind und auf der anderen Seite, an der Grenzfläche zur Luft, eine glasartige Struktur ausbilden, die einen sehr hohen mechanischen Widerstand besitzt.

Es ist bereits ein Verfahren zum Herstellen transparenter Schutzschichten aus Siliziumverbindungen bekannt, das bei der Beschichtung von Kunststoff-Substraten Verwendung findet (DE-A-3 624 467 = EP-A-0 254 205). Bei diesem Verfahren erfolgt eine chemische Dampfabscheidung unter Plasmaeinwirkung (= Plasma-CVD) auf eine polymerisierbare monomere organische Verbindung aus der Gruppe der Siloxane und Silazane, wobei dem Polymerisationsvorgang Sauerstoff im Überschuß zugeführt wird. Das Plasma wird dabei mittels Hochfrequenz zwischen zwei Elektroden erzeugt, von denen die eine eine Kathodenfunktion ausübt und mit den Substraten verbunden wird. Vor der eigentlichen Beschichtung werden die Substrate in Abwesenheit der organischen Verbindungen einem Ionenbeschuß durch Glimmentladung in einer edelgashaltigen Atmosphäre ausgesetzt.

Bei einem anderen bekannten Verfahren der plasmaunterstützten Beschichtung eines Substrats mit einem polymerisierbaren siliziumhaltigen Monomer werden die Monomere auf Silane, Silazane oder Disilazane beschränkt und die Plasmabeschichtung solange durchgeführt, bis sich eine bestimmte Taber-Abriebfestigkeit ergibt (EP-A-0 252 870).

Eine Vorrichtung, mit der optische Linsen beidseitig in einem plasmaunterstützten Verfahren beschichtet werden können, ist ebenfalls bekannt (DE-C-3 931 713). Diese Vorrichtung weist zwei Elektroden auf, zwischen denen sich Halteorgane für zu beschichtende Werkstücke befinden. Die Halteorgane befinden sich dabei auf einem definierten elektrischen Potential.

Ein ähnliches Verfahren ist zur Vorbehandlung von zur Vakuumbeschichtung vorgesehenen durchsichtigen Kunststoffsubstraten bekannt (EP-A-0 403 985). Es wurde gefunden, daß durch Plasmabeschuß der Substratoberfläche diese Oberfläche derart verändert wurde, daß sich die nachfolgende Schicht mit einer sehr großen Haftfestigkeit aufbringen läßt.

Bei einer weiteren Vorrichtung zum Beschichten von Substraten ist eine Vakuumkammer mit einem in dieser angeordneten Substratträger, mit einem Plasmaerzeuger, einem Magneten und einem Elektronenemitter vorgesehen, wobei zusätzlich in der Vakuumkammer eine Vorrichtung zur Erzeugung von Atomen, Molekülen oder Clustern der Materialien zur Erzeugung der Schicht auf den Substraten angeordnet ist, die sich unmittelbar neben dem Plasmaerzeuger und gegenüber den Substraten befindet (EP-90123712.3, K. Matl, W. Klug, A. Zöller: Ion assisted deposition with a new plasma source, paper presented at the Sec. PSE Conf. Garmisch-Partenkirchen 1990). Ein Vorteil dieser Vorrichtung besteht darin, daß sie im Gegensatz zu früheren Vorrichtungen der ionenunterstützten Beschichtung (= ion assisted deposition = IAD) große Substrathalter von ca. 1 m Durchmesser mit hoher Plasmadichte beaufschlagen kann.

Es sind außerdem Antireflexschichten bekannt, die auf Kunststofflinsen aufgebracht werden und z. B. aus zwei Schichten bestehen, von denen die erste Schicht eine SiOₓ-Schicht und die zweite Schicht eine SiO-Schicht ist (DE-A-27 38 044, Fig. 1A).

Des weiteren sind Antireflexschichten bekannt, die aus vier oder mehr Einzelschichten bestehen, wobei z. B. die Schichtfolge, vom Substrat aus gezählt, wie folgt ist: SiO, SiO₂, CeO₂, SiO₂, CeO₂, SiO₂, CeO₂ (DE-A-38 18 341).

Die DE-A-39 09 654 beschreibt ein Entspiegelungs-System auf Kunststoffsubstraten mit einer ersten Schicht aus SiO und einer zweiten Schicht aus SiO₂. Die zweite Schicht dient hierbei lediglich zur Verbesserung der Reißfestigkeit, weshalb sie nur 10 nm bis 60 nm dick ist. Auch die JP-A-60 130 704 beschreibt ein Entspiegelungs-system auf Kunststoffsubstraten.

Eine Kratzschutzschicht auf Kunststoff-Substraten, bei der eine Schichtdicke von 1 µm bis 10 µm vorgesehen ist, ist ebenfalls bekannt (US-A-3 811 753). Eine Kombination von Kratzschutz und guter Haftung läßt sich hiermit nicht erreichen.

Es ist weiterhin bekannt, eine etwa 4 µm dicke Schutzschicht auf Polymer-Linsen aufzubringen, die aus verdampftemGlas besteht, vorzugsweise aus Borsilikatglas (DE-A-25 38 982). Glas besteht nur etwa zu 80 % aus SiO₂. Außerdem bleibt offen, wie dick der Grundüberzug aus aus SiO und SiO₂ ist, auf den das Glas aufgedampft wird.

Bei einem weiteren bekannten Entspiegelungs-System, das aus zwei bzw. drei Einzelschichten besteht, wird zunächst eine homogene Schicht aus SiO oder eine inhomogene Schicht, bestehend aus SiO und einer Substanz höherer Brechzahl, auf ein Objekt aufgebracht (DE-A-22 10 505). Der Oxidationsgrad der ersten SiO-Schicht ist indessen nicht angegeben. Außerdem ist lediglich der Brechungsindex inhomogen, nicht jedoch die Härte der Schicht.

Bekannt ist es auch, bei der Entspiegelung von Polycarbonat und anderen synthetischen Substratmaterialien SiO mit optischer Schichtdicke von λ/4 und λ/2 zu verwenden (US-A-3 356 522, US-A-4 497 539). Zwischen einer Haft- und Verschleißschutzschicht wird nicht unterschieden.

Bei einem weiteren bekannten Antireflex-Schichtsystem auf Linsen aus einem synthetischen Polymerisat besteht eine erste Schicht aus einem Gemisch aus SiO und SiO₂ mit einem Brechungsindex von 1,8 und einer optischen Dicke von λ/4 (= ca. 70 nm) und weiteren λ/4- bzw. λ/2-Schichten aus TiO₂, CeO₂, Al₂O₃ und SiO₂ (DE-C-27 38 044).

Schließlich ist auch noch ein Verfahren für die Herstellung von Kunststoff-Gegenständen mit Hartbeschichtung bekannt, bei dem eine auf Silizium basierende Schicht auf einem Grundmaterial angeordnet und auf dieser Schicht ein SiO₂-Film aufgebracht wird (EP-A-0 266 225). Die SiO₂-Schicht wird hierbei mittels eines Vakuum-Dampfabscheidungsprozesses mit vorzugsweise einem Ionenplatierungsprozeß aufgebracht.

Der Erfindung liegt die Aufgabe zugrunde, eine kratzfeste Beschichtung von Brillengläsern, Objektivlinsen und dergleichen zu schaffen, die aus relativ weichem Kunststoffmaterial bestehen.

Diese Aufgabe wird gemäß den Ansprüchen 1 und 11 gelöst.

Der mit der Erfindung erzielte Vorteil besteht insbesondere darin, daß die Spannungen zwischen dem relativ weichen Kunststoffsubstrat und der harten Beschichtung verringert werden.

Die Schichtdicke der SiO-Schicht wird möglichst gering gewählt, weil SiO für die erfindungsgemäße Anwendung optisch unerwünschte Eigenschaften besitzt und deshalb in erster Linie für die Gewährleistung der Haftung verwendet wird. Bei zunehmender Schichtdicke von SiO erhöht sich die Reflexion. Dies führt zur Verstärkung der durch die nachfolgende dicke SiO₂-Schicht verursachten Oszillationen der Reflexionskurve (r = f(λ)). Außerdem ist SiO nicht absorptionsfrei. Eine dünne SiO-Schicht hält deshalb die unerwünschten Reflexionen und Absorptionen in vertretbaren Grenzen und erfüllt trotzdem die Anforderungen an die Haftfestigkeit. Die SiO₂-Schutzschicht muß dagegen relativ dick, d. h. >500 nm sein, weil sonst die Anforderungen an die Kratzfestigkeit nicht erfüllt werden. Dünnere SiO₂-Schichten brechen bei gegebener Beanspruchung auch dann durch, wenn sie sehr hart sind Außerdem verursachen sie unerwünschte Oszillationen der Reflexionskurve. Bei dickeren SiO₂-Schichten sind die Oszillationen ebenfalls vorhanden, jedoch wird der Wellenlängenabstand der Minima und Maxima bei zunehmender Schichtdicke kleiner, so daß bei visueller Betrachtung keine störenden Interferenzeffekte beobachtet werden können.

Ausführungsbeispiele der Erfindung sind in der Zeichnung dargestellt und werden im folgenden näher beschrieben. Es zeigen:
- Fig. 1: einen Zwei-Schichten-Aufbau auf einem Kunststofflinsen-Substrat;
- Fig. 2: einen Drei-Schichten-Aufbau auf einem Kunststofflinsen-Substrat;
- Fig. 3: einen Sieben-Schichten-Aufbau auf einem Kunststofflinsen-Substrat;
- Fig. 4: eine schematische Darstellung eines Plasma-IAD-Prozesses für die Erzeugung von dünnen Schichten.

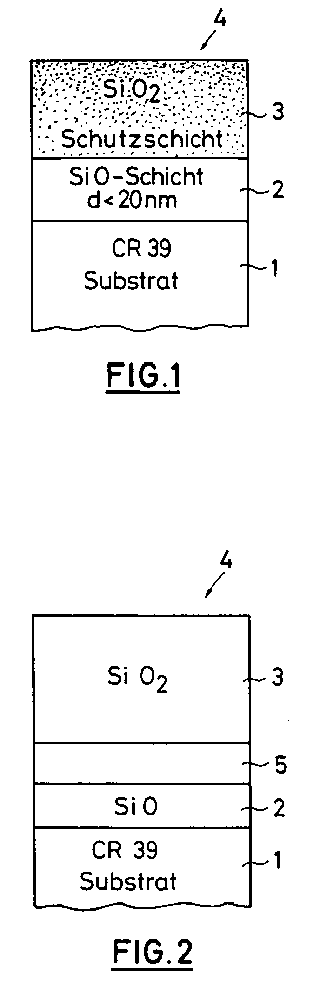

In der Fig. 1 ist ein Linsensubstrat 1 aus einem Kunststoff, z. B. CR 39, dargestellt, das mit einer sehr dünnen SiO-Schicht 2 versehen ist, die eine Dicke von einer Atomlage bis zu 20 nm aufweist. Diese Schicht 2 dient im wesentlichen dazu, eine bessere Haftung einer Schutzschicht 3 mit einer Dicke von wenigstens 500 nm aus SiO₂ zu bewirken.

Wie sich gezeigt hat, haftet eine direkt aufgebrachte SiO₂-Schicht nur schlecht auf einem Kunststoff. Bei sogenannten Kochtests werden beschichtete Substrate zyklisch für eine definierte Zeit in eine kochende Salzlösung getaucht, die z. B. 5 % NaCl in Wasser enthält, und danach jeweils in kaltem Wasser abgeschreckt. Eine direkt auf Kunststoff aufgebrachte Schichtaus SiO₂ löst sich bei derartigen Kochtests sehr schnell, z. B. nach 5 bis 10 Minuten, ab. Wird dagegen eine SiO-Schicht 2 zwischen die SiO₂-Schicht 3 und dem Kunststoff-Substrat angeordnet, die bei gleichzeitigem Plasma- und Ionenbeschuß mit einem Widerstandsverdampfer-Schiffchen oder einer Elektronenstrahlkanone aufgedampft wird, so erhöht sich die Haftung der SiO₂-Schicht 3 erheblich. Selbst nach 40-minütigem Kochtest konnten keinerlei Beeinträchtigungen an den Schichten 2 und 3 festgestellt werden.

Mit der dicken SiO₂-Schicht 3 werden gegenüber dem Kunststoff-Substrat 1 die Abriebseigenschaften erheblich verbessert. CR 39 hat beispielsweise eine Harte von ca. 180 bis 200 N/mm². Massives Quarz, also SiO₂, hat dagegen eine Härte von 4500 N/mm². Die Halte der Schutzschicht 3 kann in einem sehr weiten Bereich über die Plasma- und Beschichtungsparameter eingestellt werden. Bisher wurden Hättewette von ca. 1000 N/mm² bis nahezu 4500 N/mm² durch besondere Plasmabeschichtungen erreicht.

Grundsätzlich steigt die Abriebsfestigkeit mit der Halte und der Schichtdicke, wobei bei der Schichtdicke ab ca. 3 bis 8 µm je nach Härte ein Sättigungseffekt in der Abriebsfestigkeit eintritt. Bei der Herstellung von sehrharten und damit spröden Schichten stellen sich große Spannungen zwischen Schicht und Substrat ein. So hat CR 39 z. B. einen Wärmeausdehnungskoeffizienten von ca. 1 * 10⁻⁴/K, während der Wärmeausdehnungskoeffizient von Quarz dagegen nahezu vernachlässigbar ist. Eine 70 mm CR 39 Linse dehnt sich demnach bei einer Temperaturdifferenz von 80 °C um ca. 0,4 mm aus. Die Ausdehnung von Quarz ist dagegen nahezu 0. Die dadurch verursachten Spannungen stellen große Anforderungen an die Haftung der Schicht dar. Daher ist es sinnvoll, zumindest einen Teil der Spannungen in der Schicht selbst abzubauen. Dies wird über einen Härtegradienten erreicht, d. h. die Härte nimmt von innen am Substrat nach außen hin zu. Zur Herstellung der SiO₂-Schicht wird vorgeschlagen, SiO₂ anstatt eines Suboxides als Ausgangsmaterial zu verwenden. SiO₂ Kann mit sehr geringer Verdampferleistung verdampft werden. Dadurch wird die Temperaturbelastung der Substrate während der Herstellung der dicken Schutzschicht möglichst gering gehalten.

Durch den Einbau einer Schicht 5 zwischen der SiO- und der SiO₂-Schicht können die Oszillationen in der Reflexionskurve erheblich vermindert werden. Diese Schicht 5 weist vorzugsweise einen Brechungsindex auf, der kleiner als der Brechungsindex des Substrats 1 und größer als der Brechungsindex der Schutzschicht 3 ist. Wird als Substrat CR39 verwendet und besteht die Schutzschicht 3 aus SiO₂, so liegt der Brechungsindex der Schicht 5 zwischen 1,45 und 1,52. Die Dicke der Schicht 5 beträgt hierbei ca. 80 bis 120 nm, was bei einer Lichtwellenlänge von 550 nm einer Viertelwellenlänge entspricht. Durch diese Maßnahme werden die durch die Dicke der Schutzschicht 3 hervorgerufenen Oszillationen gedämpft.

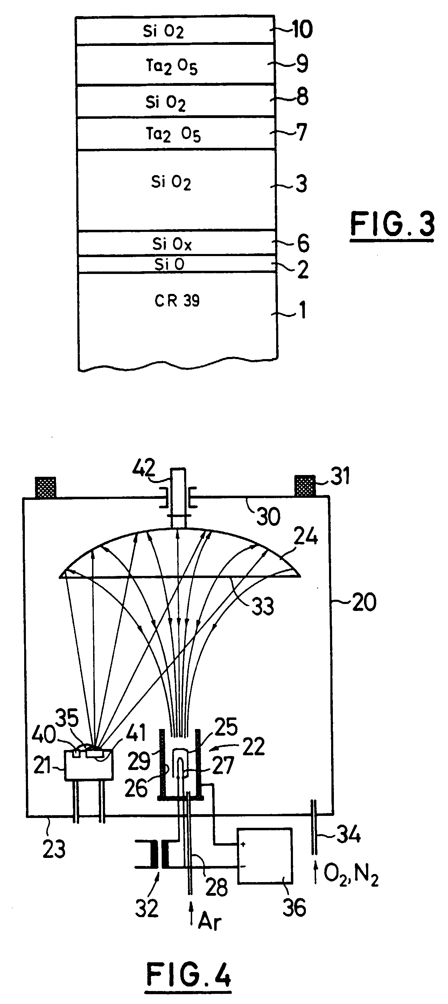

Die Fig. 3 zeigt eine Variante, bei welcher als Zwischenschicht 6 eine SiOₓ-Schicht verwendet wird, wobei x ein Zahlenwert zwischen 1 und 2 ist. Auf der SiO₂-Schicht 3 befindet sich eine Kombination aus vier weiteren Schichten 7 bis 10, die ausschließlich dem Zwecke der Reflexreduzierung dienen. Diese Schichten bestehen abwechselnd aus Ta₂O₅ und SiO₂, wobei die oberste Schicht SiO₂ ist.

Die Herstellung der Schichten erfolgt auf die nachfolgende und anhand der Fig. 4 beschriebene Weise.

In einer Standard-Vakuumanlage 20 werden die Schichten mittels eines Elektronenstrahlverdampfers 21 aufgedampft (s. o., Matl, Klug, Zöller). Eine Plasmaquelle 22 ist hierbei in der Mitte und auf dem Boden 23 der Anlage 20 angeordnet und auf einen elektrisch isolierenden Substrathalter 24 gerichtet. In der Plasmaquelle 22 ist eine zylindrische, Elektronen emittierende LaB₆-Kathode 25 von einer zylindrischen Anode 26 mit einem Durchmesser von ca. 50 mm umgeben. Es wird ein Glimmentladungs-Plasma erzeugt, wobei ein Edelgas, in erster Linie Argon, über eine Leitung 28 zugeführt wird.

Eine zylindrische Magnetspule 29 umgibt die Anode 26 und bewirkt, daß die Bewegungsmöglichkeit der Elektronen, welche das Plasma erzeugen, in axialer Richtung erheblich vergrößert und in radialer Richtung erheblich verringert wird. Die Elektronen bewegen sich spiralförmig um die magnetischen Feldlinien, wodurch das Plasma in die Beschichtungskammer 20 gelangt. An der Decke 30 der Beschichtungskammer 20 und über dem Substrathalter 24 ist eine ringförmige Magnetspule 31 mit einem inneren Durchmesser vorgesehen, der größer als der Durchmesser des Substrathalters ist. Das Magnetfeld dieser Ringspule 31 und das Magnetfeld der Zylinderspule 29 überlagern sich zu einem Führungsfeld für die Elektronen auf ihrem Weg von der Kathode 25, die durch einen Heizer 27 indirekt geheizt wird, der seinerseits von der Energieversorgung 32 gespeist wird, sowie für dasganze Plasma zwischen der Plasmaquelle 22 und dem Substrathalter 24. Vor dem kuppelförmigen Substrathalter 24 wird eine kuppelförmige Plasmarandschicht erzeugt. Weil das Potential des Substrathalters 24 relativ zum Plasma negativ ist, werden die Ionen aus der Plasmarandschicht heraus beschleunigt und bombardieren einen wachsenden Film, der dadurch verdichtet wird. Ein wesentlicher Vorteil dieses Herstellungsverfahrens im Vergleich zu herkömmlichen IAD-Verfahren mit einer Ionenquelle besteht darin, daß die Ionen, welche aus einer Plasmarandschicht, die sich parallel zur gesamten Innenfläche des Substrathalters ausbildet, starten, über einer kurzen Distanz beschleunigt werden. Bei einer Ionenquelle, wo die Beschleunigung vom Boden der Kammeraus geschieht, ist dies anders. Bei der Vorrichtung gemaß Fig. 4 werden die Ionen aus der Plasmarandschicht nicht durch Zusammenstöße und Energieverluste beeinflußt. Außerdem erstreckt sich das Plasma über die ganze Fläche zwischen der Plasmaquelle 22 und dem Substrathalter 24, so daß die Ionenquelle im Grunde denselben Bereich wie der Substrathalter 24 abdeckt. Mit einer herkömmlichen Ionenquelle mit Gitterextraktion benötigt man eine Extraktionsgitterfläche, die nahezu der Aufstrahlfläche auf dem Substrat entspricht.

Ein reaktives Gas, z. B. O₂, N₂, wird über eine Leitung 34 in die Kammer 20 eingeführt. Aufgrund des Plasmas in der Kammer 20 wird es ionisiert und aktiviert. Das verdampfte Material 35 der Elektronenstrahlkanone 21 muß ebenfalls das Plasma von dem Substrathalter 24 durchlaufen, so daß es ionisiert und aktiviert wird.

Die Plasmaquelle 22 ist elektrisch von der Kammer 20 isoliert Außer der zugeführten Entladespannung erhält man deshalb noch eine Potentialdifferenz zwischen der Quelle 22 und der Kammer 20. Die Quelle 22 nimmt ein veränderliches positives Potential gegenüber der Kammer 20 an, während der Substrathalter 24 fast auf dem gleichen Potential wie die Kammer 20 liegt Die Ionenenergie wird durch die Potentialdifferenz zwischen der Anodenröhre 26, die aus einer Gleichstromquelle 36 mit positivem Potential gespeist wird, und dem Substrathalter 24 bestimmt. Das sich verändernde Potential der Quelle 22 hängt von der Entladespannung, den Partialdrücken der Gase und der Stärke des Magnetfelds ab. Durch das positive "floating" Potential des elektrischen Felds wird ein elektrisches Feld erzeugt, das die Elektronen zwischen der Quelle 22 und dem Substrathalter 24 reflektiert. Wenn sie nicht auf die Anodenröhre 26 treffen, werden sie am Kathodenpotential reflektiert und können erneut aus der Quelle herausgelangen. Man erhält also oszillierende Elektronenwege mit einer effektiven Ionisierung und Anregung von Gasatomen und Molekülen. Aufgrund des Rückstoßeffekts, den die elektrischen Felder in der Nähe der Anode erzeugen, wird das Plasma vor dem Substrathalter 24 von Ionen dominiert Dies kann man am Potential des Substrathalters 24 erkennen, das etwa zwischen 3 und 5 Volt, bezogen auf die Kammerwand 20, beträgt. Die Entladungsparameter betragen bis zu 80 V Entladespannung, 70 A Entladestrom und 5 kW Plasmaleistung. Die Drücke belaufen sich auf 1 x 10⁻⁴ bis 8 x 10⁻⁴ mbar mit einem Verhältnis von O₂ : Ar von bis zu 4 : 1. Der beschriebene Betrieb der Plasmaquelle ermöglicht es, den Plasmaerzeugungsprozeß von dem Verdampfungsprozeß zu trennen.

Jedes verdampfbare Ausgangsmaterial, z. B. Oxide und Fluoride, kann im Verdampfer 21 verdampft werden, weil keine Kopplung zwischen Plasmaquelle und Verdampferquelle besteht

Zum Aufdampfen einer kratzfesten SiO₂-Schicht wird SiO₂-Granulat verwendet, das im Elektronenstrahlverdampfer 21 mit dem Elektronenstrahlerzeuger 40 verdampft wird. Für dieses Granulat wird eine relativ geringe Verdampferleistung benöfigt. Um die Verdampferleistung auch bei hochbrechendem Material, z. B. Ta₂O₅, gering zu halten, wird vorzugsweise ein Mehrnapftiegel mit möglichst kleinen Näpfen verwendet, von denen nur ein Napf 41 dargestellt ist Nach dem Abpumpen der Kammer 20 auf einen Druck von < 2 x 10⁻⁵ mbar erfolgt das Aufdampfen des Schichtsystems.

Die SiO-Haftschicht wird mit einer Rate von ca. 0,1 nm/s aufgedampft. Gleichzeitig mit dem Öffnen einer nicht dargestellten Verdampferblende wird die Plasmaquelle 22 zugeschaltet. Die Quelle 22 wird hierbei mit reinem Argon bei einem Partialdruck von ca. 2,5 x 10⁻⁴ mbar betrieben. Der Entladestrom beträgt ca. 30 A bei einer Entladespannung von ca. 30 V. Nach Erreichen der gewünschten Schichtdicke wird die Plasmaquelle 22 gleichzeitig mit dem Schließen der Verdampferblende abgeschaltet.

Danach erfolgt das Aufdampfen der dicken SiO₂-Schutzschicht. Auch hierbei wird die Plasmaquelle 22 mit Argon betrieben.

Die Harte der SiO₂-Schicht ist von der Plasmaentladeleistung, d. h. Strom und Spannung, dem Gasdruck und der Beschichtungsrate abhängig. Mit diesen Parametern wird der Härtegradient der Schichteingestellt Besonders geringe Härtewerte erreicht man mit geringer Plasmaleistung (< 1 kW) bei relativ hohem Druck (ca. 6 x 10⁻⁴ mbar) und einer großen Beschichtungsrate (ca. 5 x 10 nm/s). Die größten Härtewerte wurden bei durchgeführten Versuchen mit einer Plasmaleistung von ca. 5 kW bei einem Druck von 1,5 x 10⁻⁴ mbar bei einer Rate von 0,1 nm/s erreicht Nachdem die gewünschte Schichtdicke erzielt ist, wird mit dem Schließen der Verdampferblende die Plasmaquelle 22 abgeschaltet.

Danach erfolgt das Aufdampfen der ersten hochbrechenden Schicht Ta₂O₅. Prinzipiell können auch andere hochbrechende Materialien, wie z. B. Titanoxid, Zirkonoxid etc., verwendet werden. Bei den hochbrechenden Schichten wird die Plasmaquelle 22 ebenfalls mit Argon bei einem Druck von ca. 2 x 10⁻⁴ mbar betrieben. Zusätzlich wird Sauerstoff mit einem Partialdruck von ca. 4 x 10⁻⁴ mbar durch die Leitung 34 in die Kammer 20 eingelassen. Einnicht dargestellter Sauerstoffeinlaß direkt in die Plasmaquelle, analog dem Einlaß 28, ist ebenfalls möglich. Während des Aufdampfens der Tantalpentoxidschicht wird die Plasmaquelle mit einer Entladeleistung von ca. 5 kW betrieben. Die Beschichtungsrate beträgt ca. 0,2 nm/s. Die nächste Schicht SiO₂ wird prinzipiell wie die SiO₂-Schutzschicht aufgedampft, und zwar bei einem Druck von 2 x 10⁻⁴ mbar, einer Plasmaleistung von ca. 4 kW und einer Beschichtungsrate von ca. 0,5 nm/s.

Das Aufdampfen der folgenden hochbrechenden Schicht erfolgt mit den gleichen Parametern wie die erste hochbrechende Schicht. Die letzte SiO₂-Schicht wird wie die vorhergehende SiO₂-Schicht aufgedampft.

Die optimalen Herstellungsparameter der λ/4-SiOₓ-Zwischenschicht zur Dämpfung der Oszillationen der Spektralkurve, die sich zwischen der SiO-Schicht und der Schutzschicht befindet, sind von dem Härte- und damit dem Brechungsindexverlauf der Schutzschicht abhängig. Folgende Parameter sind geeignet: Druck ca. 2 x. 10⁻⁴ mbar, Plasmaleistung ca. 4 kW, Rate ca. 0,1 nm/s.

Es versteht sich, daß für die Erzeugung von Atomen, Molekülen oder Clustern der Materialien, z. B. SiO oder SiO₂, die auf eine Kunststofflinse oder dergleichen aufgebracht werden sollen, statt eines Elektronenstrahlverdampfers auch ein thermischer Verdampfer oder eine Sputterkathode verwendet werden kann. Wesentlich ist nur, daß das Plasma in einer von der Elektronenstrahlkanone etc. getrennten Vorrichtung erzeugt wird. Dadurch, daß das Plasmain der Plasmaquelle 22 und die aufzubringenden Kleinen Teilchen in einer Verdampferquelle 21 erzeugt werden, wird die Gleichmäßigkeit der Beschichtung besonders groß. Außerdem können die Beschichtungsparameter weitgehend unabhängig voneinander eingestellt werden, was für die Herstellung von Schichten mit Festigkeitsgradienten von großer Bedeutung ist.

Der Substrathalter 24, dessen unterer Rand mit 33 bezeichnet ist, kann über eine Welle 42 gedreht werden. Er kann auf seiner Unterseite zahlreiche zu beschichtende Linsen oder dergleichen aufweisen. Außerdem kann der Substrathalter 24 einen nicht dargestellten Verdampfungsschutz aufweisen, der beim Aufbringen von isolierenden Materialien das Beschichten eines Teils der Fläche des Substrathalters mit diesen isolierenden Materialien verhindert und damitein Abfließen von elektrischen Ladungen über den Substratträger ermöglicht. Weitere Einzelheiten der Vorrichtung gemäß Fig. 4 ergeben sich aus der deutschen Patentanmeldung P 40 20 158.9 und werden deshalb nicht näher beschrieben.

Trägt manbei einer Anordnung gemäß Fig. 4 die Plasmaleistung z. B. in kW über der Zeit auf, so ergibt sich eine praktisch linear ansteigende Gerade von 0,5 bis 5 kW, während gleichzeitig der Druck nahezu linear von 6 * 10⁻⁴ mbar auf 1 * 10⁻⁴ mbar abfällt. Zur selben Zeitgeht die Rate von 5,5 nm/s auf fast 0 nm/s zurück.

## Patentansprüche

1. Optische Linse, bestehend aus einem durchsichtigen Kunststoff-Substrat (1) und einer unmittelbar auf dem Substrat angeordneten ersten Schicht (2) aus SiO, die eine Dicke von einer Atomlage bis zu 50 nm aufweist, und einer zweiten Schicht (3) aus SiO₂ auf der ersten Schicht, **dadurch gekennzeichnet,** daß die zweite Schicht (3) eine Dicke von wenigstens 500 nm besitzt und wenigstens aus zwei Bereichen mit unterschiedlicher Härte besteht, wobei der Bereich mit der geringeren Härte der ersten Schicht (2) benachbart ist.

2. Optische Linse nach Anspruch 1, **dadurch gekennzeichnet,** daß die zweite Schicht (3) eine Dicke von 3 000 bis 10 000 nm aufweist.

3. Optische Linse nach Anspruch 1, **dadurch gekennzeichnet,** daß die Härte der zweiten Schicht (3) von der ersten Schicht (2) bis zu der von der ersten Schicht (2) abgewandten Oberfläche der zweiten Schicht (3) kontinuierlich zunimmt.

4. Optische Linse nach Anspruch 1, **dadurch gekennzeichnet,** daß die Härte der zweiten Schicht (3) von 500 N/mm² auf 4500 N/mm² zunimmt.

5. Optische Linse nach Anspruch 1, **dadurch gekennzeichnet,** daß zwischen der ersten Schicht (2) und der zweiten Schicht (3) eine dritte Schicht (5) aus einem Material vorgesehen ist, deren Brechungsindex kleiner als der Brechungsindex des Substrats (1) und größer als der Brechungsindex der Schutzschicht (3) ist.

6. Optische Linse nach Anspruch 5, **dadurch gekennzeichnet,** daß die dritte Schicht (6) aus SiO_{X} besteht, wobei 1 < x ≤ 2.

7. Optische Linse nach Anspruch 1, **dadurch gekennzeichnet,** daß auf der zweiten Schicht (3) ein Mehrschichten-Entspiegelungssystem (7 bis 10) vorgesehen ist.

8. Optische Linse nach Anspruch 7, **dadurch gekennzeichnet,** daß das Entspiegelungssystem vier Schichten aufweist, von denen zwei Schichten (7, 9) aus Ta₂O₅ mit zwei Schichten aus SiO₂ bestehen.

9. Optische Linse nach Anspruch 1, **dadurch gekennzeichnet,** daß die erste Schicht (2) vorzugsweise eine Dicke von 5 nm aufweist.

10. Optische Linse nach Anspruch 7, **dadurch gekennzeichnet,** daß das Entspiegelungssystem bis zu sechs Schichten aufweist, von denen bis zu drei Schichten aus Ta₂O₅ und bis zu drei Schichten aus SiO₂ bestehen.

11. Verfahren zur Herstellung einer Schicht mit inhomogenen Härten (3) auf einem durchsichtigen Kunststoff-Substrat (1) in einer Plasma-Beschichtungsanlage, das folgende Schritte aufweist:
Anordnen von einem oder mehreren durchsichtigen Kunststoff-Substraten (1) in einem Substrathalter (24);
Verdampfen von SiO in einem Verdampfer (21) bei gleichzeitiger Bestrahlung der Substrate (1) mit einem Plasma aus einer Plasmaquelle zur Bildung einer Schicht aus SiO mit einer Dicke einer Atomlage bis zu 50 nm;
Verdampfen von SiO₂ in einem Verdampfer (21) bei gleichzeitiger Bestrahlung der Substrate (1) mit einem Plasma aus einer Plasmaquelle, wobei entweder die Plasmaleistung und/oder der Gasdruck und/oder die Beschichtungsrate so verändert wird, daß auf der SiO-Schicht eine Schicht aus SiO₂ mit einer Dicke von wenigstens 500 nm, die eine inhomogene Härte aufweist, gebildet wird.

12. Verfahren nach Anspruch 11, **dadurch gekennzeichnet,** daß der Plasmaentladestrom über der Zeit zunimmt.

13. Verfahren nach Anspruch 11, **dadurch gekennzeichnet,** daß der Gasdruck über der Zeit abnimmt.

14. Verfahren nach Anspruch 11, **dadurch gekennzeichnet,** daß die Verdampfungsrate über der Zeit abnimmt.

15. Verfahren nach einem oder mehreren Ansprüchen 11 bis 14, **dadurch gekennzeichnet,** daß die Zeit etwa 15 Minuten beträgt.

16. Verfahren nach Anspruch 12, **dadurch gekennzeichnet,** daß der Plasmaentladestrom innerhalb eines Zeitbereichs von 5 bis 20 Minuten von etwa 10 A bis 100 A zunimmt.

17. Verfahren nach Anspruch 13, **dadurch gekennzeichnet,** daß der Gasdruck innerhalb eines Zeitbereichs von 5 bis 30 Minuten von ca. 8 x 10⁻⁴ mbar auf 1 x 10⁻⁴ mbar abnimmt.

18. Verfahren nach Anspruch 14, **dadurch gekennzeichnet,** daß die Leistung des Verdampfers (21) innerhalb eines Zeitraums von 5 bis 30 Minuten abnimmt, so daß die Beschichtungsrate von 10 nm/s auf 0,1 nm/s abfällt.

19. Verfahren nach Anspruch 11, **gekennzeichnet durch** folgende Schritte:
a) der Plasmaentladestrom, der zwischen Kathode (25) und Anode (26) fließt, nimmt innerhalb eines Zeitbereichs von etwa 5 Minuten bis 30 Minuten von 10 A bis 100 A zu;
b) gleichzeitig mit der Zunahme des Plasmaentladestroms nimmt der Druck des in der Vakuumkammer (20) befindlichen Gases oder Gasgemischs von 8 x 10⁻⁴ mbar auf 1 x 10⁻⁴ mbar ab;
c) gleichzeitig mit der Zunahme des Plasmaentladestroms nimmt die Leistung des Verdampfers (21) ab.

20. Vorrichtung zur Durchführung des Verfahrens nach Anspruch 15, mit:
einer Kammer (20), in der Plasma erzeugt werden kann;
einem Substrathalter (24) zur Halterung von einem oder mehreren durchsichtigen Kunststoff-Substraten (1);
einer Plasmaquelle (22) gegenüber dem Substrathalter (24);
einem Verdampfer (21) neben der Plasmaquelle (22) mit SiO;
einem Verdampfer (21) neben der Plasmaquelle (22) mit SiO₂-Granulat;
mindestens einem Ringmagneten (31) oberhalb des Substrathalters (24);
Mitteln zur Steuerung der Plasmaleistung der Plasmaquelle (22);
Mitteln zur Steuerung des Gasdrucks; und
Mitteln zur Steuerung der Beschichtungsrate des Verdampfers mit SiO₂-Granulat.

21. Vorrichtung nach Anspruch 20, **dadurch gekennzeichnet,** daß die Plasmaquelle (22) eine zylindrische Anode (26) aufweist, in der sich ein Elektronenemitter (25) befindet, und daß diese zylindrische Anode (26) von einer zylindrischen Spule (29) umgeben ist, wobei in das Innere der zylindrischen Anode (28) ein Gaseinlaß (28) eingeführt ist.

22. Vorrichtung nach den Ansprüchen 20 und 21, **dadurch gekennzeichnet,** daß die Plasmaquelle (25, 26) elektrisch von der Vakuumkammer (20) isoliert ist

## Claims

1. An optical lens comprising a transparent plastic-material substrate (1) and a first layer (2) of SiO which is disposed directly on the substrate and which has a thickness of one atomic layer to 50 nm, and a second layer (3) of SiO₂ on the first layer, characterized in that the second layer (3) has a thickness of at least 500 nm and comprises at least two regions having different hardness, the region having the lower hardness being adjacent to the first layer (2).

2. The optical lens according to Claim 1, characterized in that the second layer (3) has a thickness of 3000 to 10000 nm.

3. The optical lens according to Claim 1, characterized in that the hardness of the second layer (3) increases continuously from the first layer (2) up to that surface of the second layer (3) which faces away from the first layer (2).

4. The optical lens according to Claim 1, characterized in that the hardness of the second layer (3) increases from 500 N/mm² to 4500 N/mm².

5. The optical lens according to Claim 1, characterized in that there is provided between the first layer (2) and the second layer (3) a third layer (5) of a material whose refractive index is less than the refractive index of the substrate (1) and greater than the refractive index of the protective layer (3).

6. The optical lens according to Claim 5, characterized in that the third layer (6) is composed of SiOₓ, where 1 < x ≤ 2.

7. The optical lens according to Claim 1, characterized in that a multilayer coating system (7 to 10) is provided on the second layer (3).

8. The optical lens according to Claim 7, characterized in that the coating system has four layers, of which two layers (7, 9) are composed of Ta₂O₅ with two layers of SiO₂.

9. The optical lens according to Claim 1, characterized in that the first layer (2) preferably has a thickness of 5 nm.

10. The optical lens according to Claim 7, characterized in that the coating system has up to six layers, of which up to three layers are composed of Ta₂O₅ and up to three layers of SiO₂.

11. A method for the production of a layer with nonhomogeneous hardnesses (3) on a transparent plastic-material substrate (1) in a plasma coating installation, which method comprises the following steps:
arrangement of one or more transparent plastic-material substrates (1) in a substrate holder (24);
evaporation of SiO in an evaporator (21) with simultaneous irradiation of the substrate (1) with a plasma from a plasma source to form a layer of SiO having a thickness of one atomic layer to 50 nm;
evaporation of SiO₂ in an evaporator (21) with simultaneous irradiation of the substrate (1) with a plasma from a plasma source, in which process either the plasma power and/or the gas pressure and/or the coating rate is altered so that a layer of SiO₂ having a thickness of at least 500 nm and having nonhomogeneous hardness is formed on the SiO layer.

12. The method according to Claim 11, characterized in that the plasma discharge current increases with time.

13. The method according to Claim 11, characterized in that the gas pressure decreases with time.

14. The method according to Claim 11, characterized in that the evaporation rate decreases with time.

15. The method according to one or more of Claims 11 to 14, characterized in that the time is about 15 minutes.

16. The method according to Claim 12, characterized in that the plasma discharge current increases from about 10 A to 100 A within a time interval of 5 to 20 minutes.

17. The method according to Claim 13, characterized in that the gas pressure decreases from approximately 8 x 10⁻⁴ mbar to 1 x 10⁻⁴ mbar within a time interval of 5 to 30 minutes.

18. The method according to Claim 14, characterized in that the power of the evaporator (21) decreases within a time interval of 5 to 30 minutes so that the coating rate drops from 10 nm/s to 0.1 nm/s.

19. The method according to Claim 11, characterized by the following steps:
a) the plasma discharge current which flows between cathode (25) and anode (26) increases from 10 A to 100 A within a time interval of about 5 minutes to 30 minutes;
b) simultaneously with the increase in the plasma discharge current, the pressure of the gas or gas mixture contained in the vacuum chamber (20) decreases from 8 x 10⁻⁴ mbar to 1 x 10⁻⁴ mbar;
c) simultaneously with the increase in the plasma discharge current, the power of the evaporator (21) decreases.

20. An apparatus for performing the method according to Claim 15, comprising:
a chamber (20) in which plasma can be generated;
a substrate holder (24) for holding one or more transparent plastic-material substrates (1);
a plasma source (22) opposite the substrate holder (24);
an evaporator (21) next to the plasma source (22) containing SiO;
an evaporator (21) next to the plasma source (22) containing SiO₂ granules;
at least one ring magnet (31) above the substrate holder (24);
means for controlling the plasma power of the plasma source (22);
means for controlling the gas pressure; and
means for controlling the coating rate of the evaporator containing SiO₂ granules.

21. The apparatus according to Claim 20, characterized in that the plasma source (22) has a cylindrical anode (26) in which an electron emitter (25) is situated and in that said cylindrical anode (26) is surrounded by a cylindrical coil (29), a gas inlet (28) being introduced into the interior of the cylindrical anode (28).

22. The apparatus according to Claims 20 and 21, characterized in that the plasma source (25, 26) is electrically isolated from the vacuum chamber (20).

## Revendications

1. Lentille optique, se composant d'un substrat en matière plastique transparente (1) et d'une première couche (2) en SiO disposée sur le substrat qui présente une épaisseur de couche atomique jusqu'à 50 nm et d'une seconde couche (3) en SiO₂ sur la première couche, caractérisée en ce que la seconde couche (3) présente une épaisseur d'au moins 500 nm et se compose d'au moins deux zones de duretés différentes, la zone de dureté la plus faible étant voisine de la première couche (2).

2. Lentille optique selon la revendication 1, caractérisée en ce que la seconde couche (3) présente une épaisseur de 3000 à 10 000 nm.

3. Lentille optique selon la revendication 1, caractérisée en ce que la dureté de la seconde couche (3) augmente en continu depuis la première couche (2) jusqu'à la surface de la seconde couche (3), détournée de la première couche (2).

4. Lentille optique selon la revendication 1, caractérisée en ce que la dureté de la seconde couche (3) augmente de 500 N/mm² à 4500 N/mm².

5. Lentille optique selon la revendication 1, caractérisée en ce qu'entre la première couche (2) et la seconde couche (3), il est prévu une troisième couche (5) en une matière dont le coefficient de réflexion est inférieur au coefficient de réflexion du substrat (1) et supérieur au coefficient de réflexion de la couche de protection (3).

6. Lentille optique selon la revendication 5, caractérisée en ce que la troisième couche (6) se compose de SiO_{X}, respectivement 1 < x ≤ 2.

7. Lentille optique selon la revendication 1, caractérisée en ce que sur la seconde couche (3), il est prévu un système antireflet multicouche (7 à 10).

8. Lentille optique selon la revendication 7, caractérisée en ce que le système antireflet présente quatre couches dont deux couches (7, 9) se composent de Ta₂O₅ avec deux couches en SiO₂.

9. Lentille optique selon la revendication 1, caractérisée en ce que la première couche (2) présente de préférence une épaisseur de 5 nm.

10. Lentille optique selon la revendication 7, caractérisée en ce que le système antireflet présente jusqu'à six couches dont jusqu'à trois couches se composent de Ta₂O₅ et jusqu'à trois couches en SiO₂.

11. Procédé pour la fabrication d'une couche de dureté non homogène (3) sur un substrat en matière plastique transparent (1) dans une installation de déposition par plasma, procédé qui présente les étapes suivantes :
Disposition d'un ou de plusieurs substrats en matière plastique transparente (1) dans un porte-substrats (24) ;
Evaporation de SiO dans un évaporateur (21) par irradiation simultanée des substrats (1) par un plasma provenant d'une source à plasma pour la formation d'une couche en SiO d'une épaisseur d'une couche atomique allant jusqu'à 50 nm ;
Evaporation de SiO₂ dans un évaporateur (21) par irradiation simultanée des substrats (1) par un plasma provenant d'une source à plasma, la puissance plasmatique et/ou la pression de gaz et/ou le rendement de déposition étant modifiés de sorte que, sur la couche SiO, il se forme une couche en SiO₂ d'une épaisseur d'au moins 500 nm qui présente une dureté non homogène.

12. Procédé selon la revendication 11, caractérisé en ce que le courant de décharge plasmatique augmente au-delà du temps.

13. Procédé selon la revendication 11, caractérisé en ce que la pression de gaz diminue au-delà du temps.

14. Procédé selon la revendication 11, caractérisé en ce que le débit d'évaporation diminue au-delà du temps.

15. Procédé selon la revendication 11 à 14, caractérisé en ce que le temps s'élève à environ 15 minutes.

16. Procédé selon la revendication 12, caractérisé en ce que le courant de décharge plasmatique augmente d'environ 10 A à 100 A dans une plage de temps de 5 à 20 minutes.

17. Procédé selon la revendication 13, caractérisé en ce que la pression de gaz diminue d'environ 8 x 10⁻⁴ mbar à 1 x 10⁻⁴ dans une plage de temps de 5 à 30 minutes.

18. Procédé selon la revendication 14, caractérisé en ce que la puissance de l'évaporateur (21) diminue dans une plage de temps de 5 à 30 minutes si bien que le débit de déposition chute de 10 nm/s à 0,1 nm/s.

19. Procédé selon la revendication 11, caractérisé par les étapes suivantes :
a) le courant de décharge plasmatique qui s'écoule entre la cathode (25) et l'anode (26) augmente dans une plage de temps d'environ 5 minutes à 30 minutes de 10 A à 100 A ;
b) simultanément avec l'augmentation du courant de décharge plasmatique, la pression du gaz ou du mélange gazeux, se trouvant dans l'enceinte à vide (20), diminue de 8 x 10⁻⁴ mbar à 1 x 10⁻⁴ ;
c) la puissance de l'évaporateur (21) diminue en même temps que l'augmentation du courant de décharge plasmatique.

20. Dispositif pour la mise en oeuvre du procédé selon la revendication 15, comprenant :
une enceinte (20) dans laquelle peut être généré le plasma ;
un porte-substrats (24) pour le support d'un ou de plusieurs substrats en matière plastique transparente (1) ;
une source à plasma (22) en face du porte-substrats (24) ;
un évaporateur (21) à côté de la source à plasma (22) avec SiO ;
un évaporateur (21) à côté de la source à plasma (22) avec du granulé SiO₂ ;
au moins un aimant annulaire (31) en amont du porte-substrats (24) ;
des moyens pour la commande de la puissance plasmatique de la source à plasma (22) ;
des moyens pour la commande de la pression de gaz ; et
des moyens pour la commande du rendement de déposition de l'évaporateur avec du granulé SiO₂.

21. Dispositif selon la revendication 20, caractérisé en ce que la source à plasma (22) présente une anode cylindrique dans laquelle se trouve un émetteur d'électrons (25) et en ce que cette anode cylindrique (26) est entourée d'une bobine cylindrique (29), une entrée de gaz (28) étant ménagée à l'intérieur de l'anode cylindrique (26).

22. Dispositif selon les revendications 20 et 21, caractérisé en ce que la source à plasma (25, 26) est isolée électriquement de l'enceinte à vide (20).
